# EUROPEAN PATENT APPLICATION

(11) **EP 4 633 117 A1**
(43) Date of publication of application: **15.10.2025**
(21) Application number: 24169378.7
(22) Date of filing: 10.04.2024
(51) Int. Cl.: H04L 67/568, H04L 67/63

(54) **COMPUTER-IMPLEMENTED METHOD FOR TRANSMITTING DATA IN AN INFORMATION-CENTRIC NETWORK BY MANAGING DATA CACHES THEREOF IN A DISTRIBUTED MANNER**

(71) Applicant: Airbus S.A.S., 31700 Blagnac (FR)
(72) Inventor: Milheiro Mendes, Paulo-Jorge, 31700 Blagnac (FR)
(74) Representative: KASTEL Patentanwälte PartG mbB

(57) **Abstract**

The invention relates to a computer-implemented method for transmitting data (18) in an information-centric network (12), the information-centric network (12) being connectable to a plurality of server devices (14, 14a-f) for providing network service data (18), respectively, the information-centric network (12) being configured for receiving a request (24) for network service data (18) from a client device (16, 16a-f), wherein the information-centric network (12) includes a plurality of interconnected nodes (20) including, respectively, a cache for caching network service data (18), each of the nodes (20) being configured for routing any request (24) to another of the nodes (20) along a corresponding routing path (26) from the client device (16, 16a-f) to the corresponding server device (14, 14a-f), the corresponding routing path (26) having one or more nodes (28, 28a-g) successively visitable by the request (24) via one hop.

## Description

The invention relates to a computer-implemented method for transmitting data in an information-centric network, in particular by managing data caches thereof in a distributed manner. The invention further relates to an information-centric network, a node, a computer program, and a computer-readable data carrier.

Content delivery is a popular application on the Internet and the volume of content exchange related traffic is growing exponentially, based on the usage of application such as YouTube and Netflix. In this scenario, current TCP/IP based content distribution architectures may show some inherently inefficiency [1]. In the last couple of years several fixes like caching, the creation of Content Delivery Network (CDN) overlays, or the creation of broker-based IoT publish-subscribe systems (e.g. MQTT) are solutions that may suffer from the same set of inefficiencies of the TCP/IP model.

Information Centric Networking (ICN) in general is a tactical shift from the conventional TCP/IP communication model where the emphasis is on data rather than communication endpoints. ICN is a receiver driven communication model in which the receiver controls what is delivered by sending explicit requests for that information. The request packets are forwarded in the direction of the data source following the information provided by a routing protocol, and the resultant data packets flow in the opposite direction following the inverse path created by the request packets. Moreover, the ICN model encompasses network elements that have inbuilt caches and data can be serve from these intermediate caches.

By default, the ICN paradigm uses on-path caching techniques, where the content is cached only at the network element that are on the path between data producer and consumer. However, relying only on on-path caches may lead to a low performance system with high latency and low cache hit ratio. To mitigate this limitation, some methods propose to use a controller [2], [3] having global visibility of all the cached content. However, such approaches may require global coordination and introduce additional overhead and bottlenecks in the communication.

The following documents are referenced herein:
[1] L. Zhang, A. Afanasyev, J. Burke, V. Jacobson, K. Claffy, P. Crowley, C. Papadopoulos, L. Wang, and B. Zhang. Named data networking. ACM SIGCOMM Comput. Commun. Rev., 44(3):66-73, 2014;
[2] J. Rihab and L. C. Fourati. Ccnflow: Content-centric networking managed by openflow controller. In Proc. ComNet, 2018, pages 1-5, 2018;
[3] Z. Zhang, C.-H. Lung, M. St-Hilaire, and I. Lambadaris. An sdn-based caching decision policy for video caching in information-centric networking. IEEE Transactions on Multimedia, 22(4):1069-1083, 2019;
[4] G. Zhang, Y. Li, and T. Lin. Caching in information centric networking: A survey. Computer networks, 57(16):3128-3141, 2013;
[5] S. Podlipnig and L. Böszörmenyi. A survey of web cache replacement strategies. ACM Comput. Surv., 35(4):374-398, 2003;
[6] L. Saino, I. Psaras, and G. Pavlou. Hash-routing schemes for information centric networking. In Proc. ACM SIGCOMM ICN Workshop, pages 27-32, 2013;
[7] M. Zhang, H. Luo, and H. Zhang. A survey of caching mechanisms in information-centric networking. IEEE Communications Surveys & Tutorials, 17:1-1, 07 2015;
[8] N. Laoutaris, S. Syntila, and I. Stavrakakis. Meta algorithms for hierarchical web caches. In Proc. IEEE Int. Conf. Perform. Comput. Commun. (IPCCC), pages 445-452, 2004;
[9] Giovanna Carofiglio, Luca Muscariello, Jordan Augé, Michele Papalini, Mauro Sardara, Alberto Compagno, "Enabling ICN in the Internet Protocol: Analysis and Evaluation of the Hybrid-ICN Architecture", ACM ICN 2019;
[10] V. Jacobson, D. K. Smetters, J. D. Thornton, M. F. Plass, N. H. Briggs, and R. L. Braynard. Networking named content. In Proc. ACM CoNEXT, pages 1-12, 2009;
[11] N. Laoutaris, H. Che, and I. Stavrakakis. The Icd interconnection of Irucaches and its analysis. Performance Evaluation, 63(7):609-634, 2006;
[12] I. Psaras, W. K. Chai, and G. Pavlou. Probabilistic in-network caching for information-centric networks. In Proc. 2nd Ed. ICN Workshop Inf. Centric Netw. (ICN), pages 55-60, 2012;
[13] Y. Gui and Y. Chen. A cache placement strategy based on compound popularity in name data networking. IEEE Access, 8:196002-196012, 2020;
[14] D. Chang, M. Kwak, N. Choi, T. Kwon, and Y. Choi. C-flow: An efficient content delivery framework with openflow. In Proc. IEEE Int. Conf. Inf. Netw. (ICOIN), pages 270-275, 2014.

The object of the invention is to provide an improved method for transmitting data in an information-centric network.

To achieve this object, the invention provides a computer-implemented method according to claim 1. An information-centric network, a node, a computer program, and a computer-readable data carrier are subject-matter of the parallel claim.

Advantageous embodiments of the invention are subject-matter of the dependent claims.

In one aspect, the invention provides a computer-implemented method for transmitting data in an information-centric network, the information-centric network being connectable to a plurality of server devices for providing network service data, respectively, the information-centric network being configured for receiving a request for network service data from a client device, wherein the information-centric network includes a plurality of interconnected nodes including, respectively, a cache for caching network service data, each of the nodes being configured for routing any request to another of the nodes along a corresponding routing path from the client device to the corresponding server device, the corresponding routing path having one or more nodes successively visitable by the request via one hop, the method comprising:
a) Determining, by each node currently visited by a request for network service data on the corresponding routing path, an availability of said network service data in the respective cache, and, if said network service data is not available in the respective cache, initiating an individual off-path look-up with respect to said on-path node, said off-path look-up comprising:
   α) Broadcasting, starting from the currently visited on-path node, the request to a respective broadcast selection of off-path neighbor nodes being located off the corresponding routing path and at a respective maximum distance of K hops, *K* ≥ 1, from said on-path node, the respectively broadcast-selected off-path neighbor nodes and the currently visited on-path node as corresponding on-path node forming a corresponding broadcast group,
   β) By each broadcast-selected off-path neighbor node upon respectively receiving the request, determining the availability of the requested network service data in the respective cache, and,
   γ) If the requested network service data is available in the respective cache, causing transmission of said network service data to the corresponding on-path node of the broadcast group for providing said network service data on the corresponding routing path;
b) If the requested network service data cannot be provided by the currently visited on-path node by means of the individual off-path look-up, forwarding the request along the corresponding routing path for providing the requested network service data on the corresponding routing path; and
c) Upon providing the requested network service data on the corresponding routing path, transmitting said network service data along the corresponding reverse routing path to the client device.

Preferably, step α) further comprises:
α 1) By each visited off-path neighbor node being located at a distance of *k* hops, 1 ≤ *k* < *K,* from the corresponding on-path node, broadcasting the request to a respective broadcast-selection of off-path neighbor nodes being located off the corresponding routing path and at a distance of *k* + 1 hops, from the corresponding on-path node.

Preferably, step α) further comprises:
α 2) Broadcast-selecting by disregarding off-path neighbor nodes previously visited by said request off the corresponding routing path.

Preferably, the method further comprises:
d) Collecting, along the corresponding routing path, information related to each off-path neighbor node and on-path node visited by the request; and
e) Caching the requested network service data in one or more visited nodes selected based on the collected node-related information.

Preferably, step d) and e) comprise:
d1) Collecting, by each corresponding broadcast group, information related to each respectively visited off-path neighbor node and the corresponding on-path node; and
e1) By each broadcast group, caching the requested network service data in one or more visited nodes respectively thereof selected based on the node-related information respectively collected by the broadcast group.

Preferably, the node-related information of a reference node include or is based on one, several, or all of the following:
- an identifier for identifying the reference node;
- a degree of the reference node, said degree corresponding to the number of neighboring nodes at one hop distance therefrom;
- a bandwidth of the reference node;
- an available cache space of the reference node;
- the number of requests received previously by the reference node for the requested network service; and/or
- the hop distance to the corresponding on-path node.

Preferably, the method further comprises:
f) Counting, by each node, the number of requests received for the requested network service data, said number being indicative of a popularity of said network service data; and
g) Caching, by the one or more caching-selected nodes, the requested network service data by replacing other network service data based on the popularity.

Preferably, the method further comprises one or both of the following:
h) By each visited off-path neighbor node, causing transmission of respective node-related information to the corresponding on-path node; and/or
i) Broadcasting, transmitting, and /or forwarding the request by adding respective node-related information thereto.

Preferably, step b) further comprises:
b1) Forwarding the request to a nearest node or server device for retrieving the data in a shortest possible time by using routing information available in each on-path node.

In another aspect, the invention provides an information-centric network comprising means for carrying out the method according to any of the preceding embodiments.

In another aspect, the invention provides a node adapted for the information-centric network according to any of the preceding embodiments.

In another aspect, the invention provides a computer program which, when the program is executed by an information-centric network, cause the information-centric network to carry out the method of any of the preceding embodiments.

In another aspect, the invention provides a computer-readable data carrier having stored thereon the computer program.

Preferred embodiments of the invention may be summarized as follows:
Preferred embodiments aim to propose a new distributed caching and request routing method based on the cooperation among neighbor network elements. The proposed mechanism preferably combines the best of on-path and off-path caching techniques to better utilize the caching resources, increase cache hit ratio and minimize the overall latency.

Preferred embodiments describe a distributed cooperative cache management system for information centric networks, aiming to maximize in-network cache utilization through lightweight coordination between neighbor network elements. The proposed cooperative caching method is preferably based on the combination of features of both on-path and off-path caching techniques to maximize cache hit ratio, reduce data access time, and maintain lower computational complexity.

The combination of on-path and off-path methods is preferably done by including a spray-out lookups to a limited number of neighbors at each visited on-path node. To avoid querying the same neighbors at different on-path visited nodes, the proposed solution preferably adapts the on-path signaling to pass the set of already queried network elements to the next-hop. The signaling done on-path towards the data source is stopped when a copy of the required data is found in any on-path and off-path visited node or at the data source.

The information collected while probing the path towards the data source is then preferably used to decide where to cache the data object while following the reverse path to the requested data consumer. A copy of the data object can be cached in any on-path visited network element as well as all the previously queried off-path nodes, based on a set of criteria related to the properties of the data and of each visited node.

Independently of the number of data copies deployed in the network, the preferred embodiments always try to store the data object in the network edge nearest the data consumer to reduce the latency of very popular data. In this case, in order not to reduce the cache hit of the data that needs to be evicted from an almost full edge cache, the evicted data is not deleted but cached in a neighbor node using a hash-based method.

The support for in-network caching feature in ICN frameworks [1] has led to many recent works presenting novel caching techniques including the strategies for placement of caches in the network [4], and cache replacement policies [5], and search policies [6], focusing either on off-path or on-path caching.

In what concerns on-path caching strategies, the content is cached along the path from data producer to data consumer [7]. This is a commonly used strategy with web-caching systems [8] due to its simplicity and low coordination overhead, since ICN frameworks like NCN [1] and hICN [9] inherently support on-path caching [10]. In this context, there are several proposals to manage on-path caching, namely Leave Copy Everywhere [6], Leave Copy Down [11], and Probabilistic Caching [12].

The Leave Copy Everywhere method is a simple and popular non-cooperative on-path caching strategy in which data is store in all cache enabled nodes available in the return path from the data provider to the requesting consumer. As a result, the Leave Copy Everywhere may have an enormous data redundancy.

To mitigate this issue, the Leave Copy Down method aims to bring data closer to the consumer after each subsequent hit, by copying the data one hop down the hit node to reduce access time for subsequent requests. As a results this method utilizes better cache space than the Leave Copy Everywhere method, but may degrade the performance for unique/limited repeat requests.

With the aim of reducing cache redundancy and improving cache utilization, Probabilistic Caching methods employ a probability based on-path caching strategy, computing using the cache weight factor, which can be created based on different metrics such as data and node popularity [13].

A different method may rely on using an off-path caching strategy, in which on-path network elements collaborated with off-path network elements to perform data lookup operations, aiming to improve cache hit ratio while probing the network in the direction of the data provides. In the reversed path, network elements make cooperative decisions to caching/replacing data, aiming to augment cache space utilization and avoid cache data redundancy. In off-path caching strategies, cooperative decisions are taken among network elements based on predefined rules [6], or by coordinating with the SDN controller [3]. SDN controller-based caching strategies [14] aim to determine data caching/replacement based on consumer requests and a global view of the network topology. Due to the global topological view, the SDN controller can efficiently decide which cache is suitable for which data based for instance on cache location and content popularity, allowing for the efficient utilization of cache space in the network. However, while centralized cache management improves the cache hit ratio and reduces content retrieval time, it may have two significant drawbacks. First, it increases signaling overhead due to interaction between the router and controller, and second is due to central node failure.

Embodiments of the invention preferably have the following advantages and effects:
In comparison with other approaches that aim to develop suitable distributed cache management schemes for information centric networks, preferred embodiments may have the following benefits:
- Combines the benefits of on-path and off-path caching to reduce latency and increase cache hits;
- Has reduced overhead, by reducing the number of concurrent queries to off-path network nodes;
- Takes decisions to cache data based not only on data popularity, but on the combination of several metrics characterizing the data object and the visited nodes, such as nodes with higher available bandwidth, higher node degree and higher betweenness and data objects that are locally popular, have a shorter validity time and are cached in the neighbor.

Embodiments of the invention are now explained in more detail with reference to the accompanying drawings of which
- Fig. 1: shows an embodiment of a network arrangement;
- Fig. 2: shows the network arrangement of Fig. 1;
- Fig. 3: a first embodiment of a computer-implemented method; and
- Fig. 4: a second embodiment of a computer-implemented method.

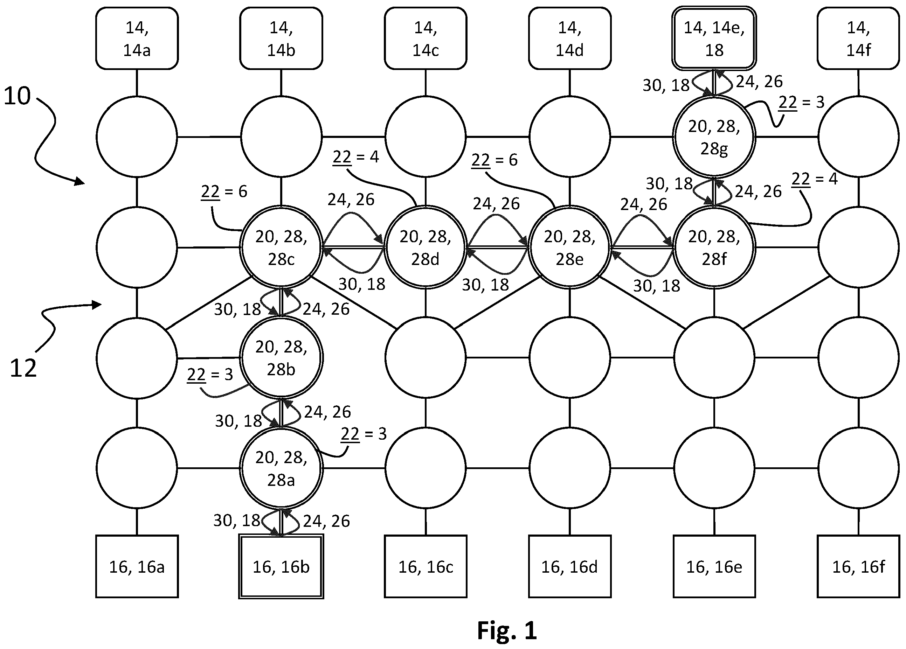

Fig. 1 shows an embodiment of a network arrangement 10. The network arrangement 10 includes an information-centric network 12, a plurality of server devices 14, and a plurality of client devices 16.

Each of the plurality of server devices 14 and each of the plurality of client devices 16 is connected to the information-centric network 12. The server devices 14 are respectively configured for providing network service data 18 via the information-centric network 12. The client devices 16 are configured for requesting said network service data 18 via the information-centric network 12.

The information-centric network 12 includes a plurality of interconnected nodes 20. Each node 20 is connected to at least one other node 20 of the information-centric network 12. The number of nodes 20 that a reference node 20 is directly connected to, is called the degree 22 of said reference node 20. The respective degree 22 of different nodes 20 can also be different. The nodes 20 further include, respectively, a cache for caching network service data 18.

When a client device 16 requests network service data 18, the client device transmits a request 24 for said network service data 18 to one of the nodes 20 of the information-centric network 12. The nodes 20 are, respectively, configured for routing the request 24 along a corresponding routing path 26 from the client device 16 to the corresponding server device 14 providing the requested network service data 18. The routing of the request 24 is based on routing information of the information-centric network 12 that is accessible to the nodes 20 on the routing path 20.

The corresponding routing path 26 includes one or more nodes 20 that are successively visited by the request 24 via one hop. Each node 20 that is visited along the corresponding routing path 26 is called on-path node 28.

For example, as shown in Fig. 1, the network arrangement 10 includes a first client device 16a, a second client device 16b, a third client device 16c, a fourth client device 16d, a fifth client device 16e, and a sixth client device 16f. The network arrangement 10 further includes a first server device 14a, a second server device 14b, a third server device 14c, a fourth server device 14d, a fifth server device 14e, and a sixth server device 14f.

In the example, the second client device 16b requests network service data 18 by transmitting the request 24 to a first on-path node 28a. Based on the routing information, the first on-path node 28a forwards the request 24 to a second on-path node 28b. Based on the routing information, the second on-path node 28b forwards the request 24 to a third on-path node 28c. Based on the routing information, the third on-path node 28c forwards the routing information to a fourth on-path node 28d. Based on the routing information, the fourth on-path node 28d forwards the request 24 to a fifth on-path node 28e. Based on the routing information, the fifth on-path node 28e forwards the request 24 to a sixth on-path node 28f. Based on the routing information, the sixth on-path node 28f forwards the request to a seventh on-path node 28g. Finally, the seventh on-path node 28g forwards the request to the fifth server device 14e that is providing the requested network service data 18.

The degree 22 of the first on-path node 28a is three. The degree 22 of the second on-path node 28b is three. The degree 22 of the third on-path node 28c is six. The degree 22 of the fourth on-path node 28d is four. The degree 22 of the fifth on-path node 28e is six. The degree 22 of the sixth on-path node 28f is four. The degree 22 of the seventh on-path node 28g is three.

The fifth server device 14e provides the requested network service data 18 to the seventh on-path node 28g. Thus, the corresponding routing path 26 from the second client device 16b to fifth server device 14e includes seven on-path nodes 20, 28, 28a-g that are successively visited by the request 24 via one hop. After providing the requested network service data 18 on the corresponding routing path 26, the network service data 18 is transmitted along the corresponding reverse routing path 30 to the second client device 16b.

In a common caching scheme, the network service data 18 is cached or stored in the cache of each visited on-path node 20, 28, 28a-g. Thus, if the same network service data 18 is requested again, any of the visited on-path nodes 20, 28, 28a-g may provide the requested network service data 18.

An idea of preferred embodiments is to find an improved caching scheme. Another idea of preferred embodiments is to provide the network service data 18 in a more efficient way.

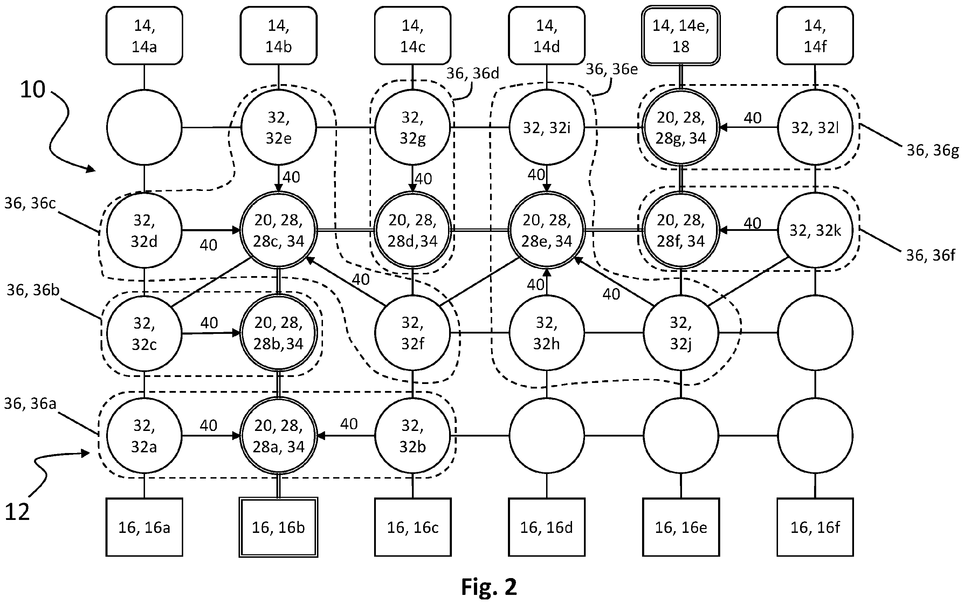

Fig. 2 shows again the network arrangement 10 of Fig. 1.

As can be seen from Fig. 2, each of the nodes 20 is connected to at least one other node 20. For instance, each on-path node 28, 28a-g includes a number (zero or more) of neighbor nodes 32 that are off the corresponding routing path 24 and at a distance of one hop from the respective on-path node 28, 28a-g.

Here, the first on-path node 28a is connected to a first neighbor node 32a and a second neighbor node 32b that are both located off the corresponding routing path 26 at a distance of one hop from the first on-path node 28a.

The second on-path node 28b is connected to a third neighbor node 32c that is located off the corresponding routing path 26 at a distance of one hop from the second on-path node 28b.

The third on-path node 28c is connected to the third neighbor node 32c, a fourth neighbor node 32d, a fifth neighbor node 32e, and a sixth neighbor node 32f that are all located off the corresponding routing path 26 at a distance of one hop from the third on-path node 28c.

The fourth on-path node 28d is connected to the fifth neighbor node 32f and a seventh neighbor node 32g that are both located off the corresponding routing path 26 at a distance of one hop from the fourth on-path node 28d.

The fifth on-path node 28e is connected to the sixth neighbor node 32f, an eighth neighbor node 32h, a nineth neighbor node 32i, and a tenth neighbor node 32j that are all located off the corresponding routing path 26 at a distance of one hop from the fifth on-path node 28e.

The sixth on-path node 28f is connected to the tenth neighbor node 32j and an eleventh neighbor node 32k that are both located off the corresponding routing path 26 at a distance of one hop from the sixth on-path node 28f.

Finally, the seventh on-path node 28g is connected to the nineth neighbor node 32i and a twelfth neighbor node 321 that are both located off the corresponding routing path 26 at a distance of one hop from the seventh on-path node 28g.

The first to twelfth neighbor nodes 32, 32a-l are all located off the corresponding routing path 26 by a distance of one hop from the respective on-path node 28, 28a-g. Regarding a distance above one hop, there are further off-path neighbor nodes 32.

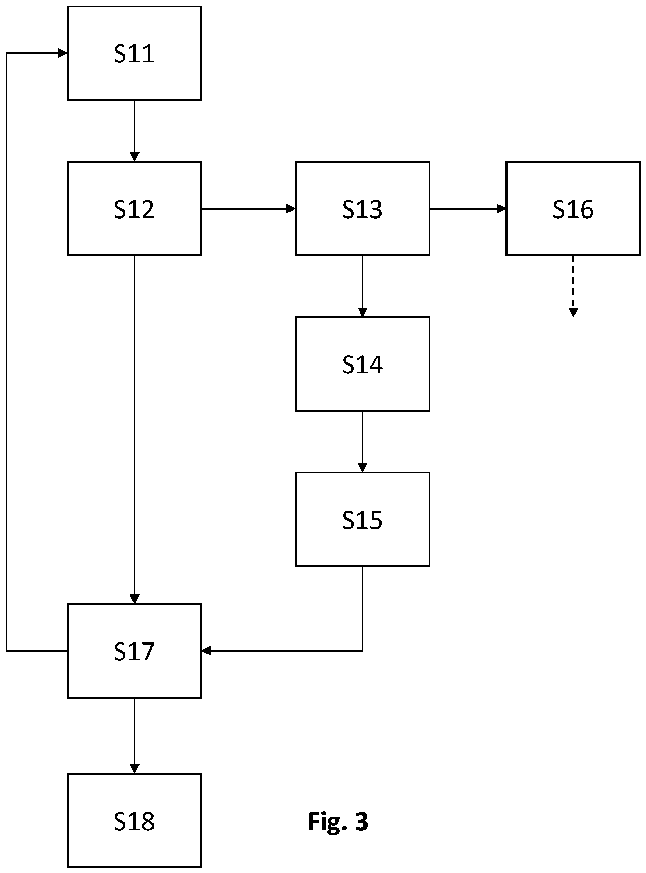

Fig. 3 shows a first embodiment of a computer-implemented method for transmitting data in the information-centric network 12.

In a step S11, the method includes:
- Determining, by each node 20, 28, 28a-g currently visited by the request 24 for network service data 18 on the corresponding routing path 26, an availability of said network service data 18 in the respective cache.

In a step S12, the method includes:
- If said network service data 18 is not available in the respective cache, initiating an individual off-path look-up with respect to said on-path node 20, 28, 28a-g.

In a step S13, the individual off-path look-up includes:
- Broadcasting, starting from the currently visited on-path node 20, 28, 28a-g, the request 24 to a respective broadcast selection of off-path neighbor nodes 32, 32a-l being located off the corresponding routing path 26 and at a respective maximum distance of *K* hops, *K* ≥ 1, from said on-path node 20, 28, 28a-g, the respectively broadcast-selected off-path neighbor nodes 32, 32a-l and the currently visited on-path node 20, 28, 28a-g as corresponding on-path node 34 forming a corresponding broadcast group 36.

In the example, the first on-path node 28a as corresponding on-path node 34 receives the request 24 for network service data 18 from the second client device 16b and determines according to step S11 the availability of said network service data 18 in its cache.

If said network service data 18 is not available in its cache, the first on-path node 28a initiates an individual off-path look-up according to step S13. Said individual off-path look-up with respect to the first on-path node 28a comprises the broadcasting of the request 24 to a broadcast selection of (zero or more) off-path neighbor nodes 32, 32a, 32b at a maximum distance of, e.g., *K* = 1 hop from the first on-path node 28a. The maximum distance K can be different for each on-path node 28, 28a-g.

The broadcast selection may be chosen, e.g., such that any off-path neighbor node 32, 32a-l is visited at most once by the request 24. In other words, the broadcast selection may be chosen by disregarding off-path neighbor nodes 32, 32a-l previously visited by said request 24 off the corresponding routing path 26. However, within the scope of the invention, this is not necessary.

Thus, the first-on path node 28a broadcasts the request 24 to the first off-path neighbor node 32a and the second off-path neighbor node 32b.

In a step S14, the off-path look-up includes:
- By each broadcast-selected off-path neighbor node 32, 32a-l upon respectively receiving the request 24, determining the availability of the requested network service data 18 in the respective cache.

In a step S15, the off-path look-up includes:
- If the requested network service data 18 is available in the respective cache, causing transmission of said network service data 18 to the corresponding on-path node 34 of the broadcast group 36 for providing said network service data 18 on the corresponding routing path 26.

In the example, the first off-path neighbor node 32a and the second off-path neighbor 32b determine the availability of the requested network service data 18 in their respective cache upon receipt of the request 24.

If the requested network service data 18 is available, the network service data 18 is transmitted to the corresponding on-path node 34 which is the first off-path neighbor node 32a. If the requested network service data 18 is not available, the individual off-path look-up may be stopped or continued depending on the maximum distance of K hops with respect to the corresponding on-path node 34.

Thus, in a step S16, the off-path look may continue according to the following:
- By each visited off-path neighbor node 32, 32a-l being located at a distance of *k* hops, 1 ≤ *k* < *K,* from the corresponding on-path node 34, broadcasting the request 24 to a respective broadcast-selection of off-path neighbor nodes 32 being located off the corresponding routing path 26 and at a distance of *k* + 1 hops, from the corresponding on-path node 34.

In the example, since the maximum distance is *K* = 1 hops with respect to the first on-path node 28a, the first off-path neighbor node 32a and the second off-path node 32b do not broadcast according to step S16, if the requested network service data 18 is not available in the cache of the first off-path neighbor node 32a and the second off-path neighbor 32b, respectively. In this example, the individual off-path look up stops. The first on-path node 28a, the first off-path neighbor node 32a, and the second off-path neighbor node 32b form thus a first broadcast group 36a.

In a step S17, the method includes:
- If the requested network service data 18 cannot be provided by the currently visited on-path node 28, 28a-g by means of the individual off-path look-up, forwarding the request 24 along the corresponding routing path 26 for providing the requested network service data 18 on the corresponding routing path 26.

In the example, the request 24 is forwarded to the second on-path node 28b. The method continues with step S11 to step S16 with the second on-path node 28b being the corresponding on-path node 34. In step S13, the second on-path node 28b and the third off-path neighbor node 32c may form a second broadcast group 36b, if the maximum distance of hops is again *K* = 1 from the second on-path node 28b.

If the network service data 18 cannot be provided by the second-on-path node 28b by means of the individual off-path look up, the request 24 is forwarded to the third on-path node 28c. The method continues with step S11 to step S16 with the third on-path node 28c being the corresponding on-path node 34. In step S13, the third on-path node 28c, the fourth off-path neighbor node 32d, the fifth off-path neighbor node 32e, and the sixth off-path neighbor node 32f may form a third broadcast group 36c, if the maximum distance of hops is again *K* = 1 from the third on-path node 28c.

The broadcast selection may be chosen, e.g., such that any off-path neighbor node 32, 32a-l is visited at most once by the request 24. Thus, in the example, the third broadcast group 36c does not include the third off-path neighbor node 32c, because the third off-path neighbor node 32 has been already included in the second broadcast group 36b.

In a step S18, the method includes:
- Upon providing the requested network service data 18 on the corresponding routing path 24, transmitting said network service data 18 along the corresponding reverse routing path 30 to the client device 16.

Fig. 2 further shows a fourth broadcast group 36d, a fifth broadcast group 36e, a sixth broadcast group 36f, and a seventh broadcast group 36g that may be formed according to the method with *K* = 1 for the fourth on-path node 28d, the fifth on-path node 28e, the sixth on-path node 28f, and the seventh on-path node 28g, respectively. However, it is to be noted that not all of the shown broadcast groups 36a-36f actually need to be explored according to the method. In implementations of the method, it may occur that none of the broadcast groups 36 needs to be explored, for example, when the network service data 18 is already available in the first on-path node 28a. Furthermore, a broadcast group 36 may also include the corresponding on-path node 34, only, for example, when any off-path neighbor node 32 has been already included previously in another broadcast group 36.

In any case, the method can stop exploring further broadcasts groups 36 as soon as the requested network service data 18 can be provided on the corresponding routing path 26.

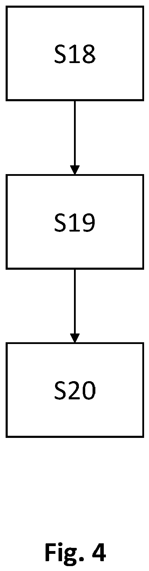

Fig. 4 shows a second embodiment of the method. The second embodiment may include the steps S11 to S17 or a selection thereof. However, the steps S11 to S17 are not shown again.

In a step S19, the method includes:
- Collecting, along the corresponding routing path 26, information 38 related to each off-path neighbor node 32, 32a-l and on-path node 28, 28a-g visited by the request 24; and
- Caching the requested network service data 18 in one or more visited nodes 28, 28a-g, 32, 32a-l selected based on the collected node-related information.

In the step S19, each broadcast group 36, 36a-g may collect information 38 about its members. For example, each visited off-path neighbor node 32, 32a-l may cause transmission of respective node-related information 38 to the corresponding on-path node 28, 28a-g, 34 where the information 38 may be collected. Said node-related information 38 may be, for example, the degree 22 and/or the available cache space of each member of the respective broadcast group 36, 36a-g. Based on the collected node-related information 38, each broadcast group 36, 36a-g may select one or more members for caching the request network service data 18. Thus, in contrast to the caching scheme as described with reference to Fig. 1, the network service data 18 may not be cached in the visited on-path node 20, 28, 28a-g, but in any other member of the corresponding broadcast group 36, 36a-g.

In a further embodiment of the method, the network service data 18 is not even cached in any member of a broadcast group 36, 36a-g, but at least in one or more nodes 20, 28, 28a-g, 32, 32l of one or more broadcast groups 36, 36a-g that have been visited by the request 24.

In a step S20, the method includes:
- Counting, by each node 20, the number of requests 24 received for the requested network service data 18, said number being indicative of a popularity of said network service data 18; and
- Caching, by the one or more caching-selected nodes 20, the requested network service data 18 by replacing other network service data 18 based on the popularity.

When a node 28, 28a-g, 32, 32a-l is selected for caching according to step S19, said selected node 28, 28a-g, 32, 32a-l may not have enough cache space available for caching the requested network service data 18. In such a case, each node 20 may count the number of request 24 received every requested network service data 18 and cache requested network service data 18 based on popularity.

For example, if the selected node 28, 28a-g, 32, 32a-l has stored network service data 18 that is less popular of the currently requested network service data 18, the selected node 28, 28a-g, 32, 32a-l may replace the less popular network service data 18 by overwriting the latter with the currently requested network service data 18. If the selected node 28, 28a-g, 32, 32a-l has no cached network service data 18 that is less popular than the currently requested network service 18, another node 28, 28a-g, 32, 32a-l may be selected for caching the currently requested network service data 18.

The data that has been replaced, may be stored in another node 20 neighboring the selected node 28, 28a-g, 32, 32a-l.

With reference to Fig. 1 and 2, preferred embodiments of the invention may be summarized as follows:
Herein, a distributed cache management scheme for information-centric networks is proposed, which is preferably based on two operational phases:
- Data request: the request packet originated by a consumer is forwarded to the nearest location to retrieve the data in the shortest possible time. In the process, all on-path nodes and the off-path nodes within a certain range will be monitored.
- Caching decision: the data packet originated by the data holder (source or cache) is forwarded in the reverse path of the request and in this way, data will be cached in some of the visited on-path nodes and their off-path neighbors.

Fig. 1 and 2 aim to illustrate the operation of the two phases (data request and caching decision) of the preferred embodiments of the mechanism. Fig. 1 and 2 show a network with six data producers 14, 14a-f and six consumers 16, 16a-f and 24 network elements 20. From these seven network elements 28, 28a-g are the selected routers that create the path from 14e to 16b. These routers have twelve neighbors 32, 32a-l distributed among them, being some of the neighbors shared between more than one on-path router. For instance, neighbor 32j is a neighbor of network element 28e and 28f, while neighbor 32f is a neighbor of network elements 28c, 28d, and 28e.

### Data request phase:

When an edge node (28a in Fig. 1 and 2) receives a data request from a local host 16b, it starts the data request phase in which the data request is forwarded to the nearest location to retrieve the data in the shortest possible time (following the shortest path 28a-28b-28c-28d-28e-28f-28g, by using the routing information available in each on-path node. In this process, the data request is furnished with an empty list of off-path nodes, called off-path node list, after which the following set of operations are done in each one of the visited on-path nodes:
- The node first checks its own cache to see if it can serve the data requested. If the data request is locally available, the data request is finished, and the caching decision phase is started. However, if the requested data is not locally available, the node increases the local variable that counts the number of received requests for that data, or starts a new variable. After that off-path lookup is started:
- Off-path lookup operation:
   ∘ The data request is broadcasted to all off-path neighbors within a distance of *K* hops from the current node, with the exceptions of the nodes that are already on the off-path node list carried in the data request. For instance, on-path node 28c broadcasts to neighbor node 32d and 32f with *K* = 1. It does not include neighbor 32c, since this node is already in the off-path node list, included by on-path node 28b.
   ∘ The off-path lookup operation starts by adding the following information to the data request packet: the identification of the on-path node starting the lookup operation; a hop count variable initiated with the value of allowed maximum number of hops (*K*).
   ∘ All visited off-path nodes will: i) increase the local variable that counts the number of received requests for that data, or start a new variable; ii) add to the data request packet their own identification as well as information about their average bandwidth and degree.
   ∘ Any visited off-path neighbor that does not have the requested data in its locale cache will be able to further broadcast the data request if after decreasing the hop count variable by on, the hop count is still positive. Otherwise, the off-path lookup operation is finished and the data request packet is sent back in the reverse path until the on-path node is found.
   ∘ If an off-path node has the requested data in its local cache, the data request phase is finished, and the caching decision phase is started.
- After the on-path node that started the lookup operation receives all data request packets (in the same amount as its node degree) the data request phase proceeds by having the data request packet being forwarded to the next on-path node in the direction of the data source. However, if the on-path node that started the lookup operation received at least one data packet from its neighbors, it will finish the data request phase by not forwarding the data request any further.

### Caching decision phase:

This phase preferably starts after the requested data is found during the previous data request phase (in Fig. 1 and 2, data is found in producer 14e). Once found, data packets are sent in the reverse direction used to forward the data request packets (28g to 28a in Fig. 1 and 2). Besides the requested data objects, data packets carry information about all the on-path (including the data holder) and off-path nodes visited during the data request phase, including the topological distances between them.

In addition to forwarding data packets, each on-path node decides whether (or not) to cache the data in the local cache or in the cache of any of its K-hop neighbors. Caching decisions are done based on the properties of all on-path nodes and all visited off-path nodes, as well as the properties, as follows:
- If the current on-path node is the edge node, meaning that it is at one hop distance from the data consumer (28a in Fig. 1 and 2), then it stores the data in its local cache. If the cache has no place for the new data, then:
   ∘ Another data object is chosen from the existing cache for replacement, to create space for the new data. The data object selected to be replaced is place in the cache of one of the neighbors of the edge node. To select the proper neighbor node, the edge computes a number value by passing the name of the content to a hash function. The result of the hash function is used to identify the precise neighbor where the replaced data should be stored.
- If the current on-path node is not the edge:
   ∘ From within the group of itself and its neighbor nodes, it will select as new data holders the nodes that: i) have cache space available; ii) bandwidth and degree above the average values of all nodes listed in the off-path node list. For instance, on-path node 28e will select as new potential data holder the following nodes: 28e, 32j, and 32f due to their higher node degree (assuming that all the neighbors have available cache space and similar bandwidth).
   ∘ If the current on-path node is in the group of selected nodes, it will store the data in its local cache if there is available space. If there is no available space, the new data will be locally stored, replacing another data object, only if:
      ▪ It is locally more popular than some of the locally stored data, meaning that it has a higher number of requests.
      ▪ The topological distance from the current node to the previous holder of the received data is higher than some of the locally stored data.
      ▪ It has a shorter validity than some of the locally stored data.
   ∘ After finishing its caching decision process, the current on-path node sends the data packet to all its neighbor nodes that are in the group of selected nodes.
   ∘ Each off-path neighbor node will store the data in its local cache if there is available space. If there is no available space, the new data will be locally stored, replacing another data object, only if:
      ▪ It is locally more popular than some of the locally stored data, meaning that it has a higher number of requests.
      ▪ The topological distance from the current node to the previous holder of the received data is higher than some of the locally stored data.
      ▪ It has a shorter validity than some of the locally stored data.
   ∘ After all off-path neighbors finished their caching decision process, the current on-path node sends the data packet to the next on-path node following the reverse path created by the data request packet.

The invention is embodied in the computer-implemented method as described herein. The invention is further embodied in the information-centric network 12 comprising means for carrying out said method and the node 20 adapted for said information-centric network 12. The invention is further embodied in a computer program which, when the program is executed by an information-centric network 12, cause the information-centric network to carry out the described method. The invention is further embodied in a computer-readable data carrier having stored thereon said computer program.

### List of reference signs:

- 10: network arrangement
- 12: information-centric network
- 14: server device
- 14a: first server device
- 14b: second server device
- 14c: third server device
- 14d: fourth server device
- 14e: fifth server device
- 14f: sixth server device
- 16: client device
- 16a: first client device
- 16b: second client device
- 16c: third client device
- 16d: fourth client device
- 16e: fifth client device
- 16f: sixth client device
- 18: network service data
- 20: node
- 22: degree
- 24: request
- 26: routing path
- 28: on-path node
- 28a: first on-path node
- 28b: second on-path node
- 28c: third on-path node
- 28d: fourth on-path node
- 28e: fifth on-path node
- 28f: sixth on-path node
- 28g: seventh on-path node
- 30: reverse routing path
- 32: off-path neighbor node
- 32a: first off-path neighbor node
- 32b: second off-path neighbor node
- 32c: third off-path neighbor node
- 32d: fourth off-path neighbor node
- 32e: fifth off-path neighbor node
- 32f: sixth off-path neighbor node
- 32g: seventh off-path neighbor node
- 32h: eight off-path neighbor node
- 32i: nineth off-path neighbor node
- 32j: tenth off-path neighbor node
- 32k: eleventh off-path neighbor node
- 32l: twelfth off-path neighbor node
- 34: corresponding on-path node
- 36: broadcast group
- 36a: first broadcast group
- 36b: second broadcast group
- 36c: third broadcast group
- 36d: fourth broadcast group
- 36e: fifth broadcast group
- 36f: sixth broadcast group
- 36g: seventh broadcast group
- 38: node-related information

## Claims

1. A computer-implemented method for transmitting data (18) in an information-centric network (12), the information-centric network (12) being connectable to a plurality of server devices (14, 14a-f) for providing network service data (18), respectively, the information-centric network (12) being configured for receiving a request (24) for network service data (18) from a client device (16, 16a-f), wherein the information-centric network (12) includes a plurality of interconnected nodes (20) including, respectively, a cache for caching network service data (18), each of the nodes (20) being configured for routing any request (24) to another of the nodes (20) along a corresponding routing path (26) from the client device (16, 16a-f) to the corresponding server device (14, 14a-f), the corresponding routing path (26) having one or more nodes (28, 28a-g) successively visitable by the request (24) via one hop, the method comprising:
a) Determining, by each node (28, 28a-g) currently visited by a request (24) for network service data (18) on the corresponding routing path (26), an availability of said network service data (18) in the respective cache, and, if said network service data (18) is not available in the respective cache, initiating an individual off-path look-up with respect to said on-path node (28, 28a-g), said off-path look-up comprising:
α) Broadcasting, starting from the currently visited on-path node (28, 28a-g), the request (24) to a respective broadcast selection of off-path neighbor nodes (32, 32a-l) being located off the corresponding routing path (26) and at a respective maximum distance of *K* hops, *K* ≥ 1, from said on-path node, the respectively broadcast-selected off-path neighbor nodes (32, 32a-l) and the currently visited on-path node (28, 28a-g) as corresponding on-path node (34) forming a corresponding broadcast group (36, 36a-g),
β) By each broadcast-selected off-path neighbor node (32, 32a-l) upon respectively receiving the request (24), determining the availability of the requested network service data (18) in the respective cache, and,
γ) If the requested network service data (18) is available in the respective cache, causing transmission of said network service data (18) to the corresponding on-path node (34) of the broadcast group (36, 36a-g) for providing said network service data (18) on the corresponding routing path (26);
b) If the requested network service data (18) cannot be provided by the currently visited on-path node (28, 28a-g) by means of the individual off-path look-up, forwarding the request (24) along the corresponding routing path (26) for providing the requested network service data (18) on the corresponding routing path (26); and
c) Upon providing the requested network service data (18) on the corresponding routing path (26), transmitting said network service data (18) along the corresponding reverse routing path (30) to the client device (16, 16a-f).

2. The method according to claim 1, **characterized in that** step α) further comprises:
α 1) By each visited off-path neighbor node (32, 32a-l) being located at a distance of *k* hops, 1 ≤ *k* < *K,* from the corresponding on-path node (34), broadcasting the request to a respective broadcast-selection of off-path neighbor nodes (32, 32a-l) being located off the corresponding routing path and at a distance of *k* + 1 hops, from the corresponding on-path node (34).

3. The method according to any of the preceding claims, **characterized in that** step α) further comprises:
α 2) Broadcast-selecting by disregarding off-path neighbor nodes (32, 32a-l) previously visited by said request (24) off the corresponding routing path (26).

4. The method according to any of the preceding claims, further comprising:
d) Collecting, along the corresponding routing path (26), information (40) related to each off-path neighbor node (32, 32a-l) and on-path node (28, 28a-g) visited by the request (24); and
e) Caching the requested network service data (18) in one or more visited nodes (20, 28, 28a-g, 32, 32a-l) selected based on the collected node-related information (40).

5. The method according to claim 4, **characterized in that** step d) and e) comprise:
d1) Collecting, by each corresponding broadcast group (36, 36a-g), the information (40) related to each respectively visited off-path neighbor node (32, 32a-l) and the corresponding on-path node (34); and
e1) By each broadcast group (36, 36a-g), caching the requested network service data (18) in one or more visited nodes (20, 28, 28a-g, 32, 32a-l) respectively thereof selected based on the node-related information (40) respectively collected by the broadcast group (36, 36a-g).

6. The method according to claim 4 or 5, **characterized in that** the node-related information of a reference node include or is based on one, several, or all of the following:
- an identifier for identifying the reference node (20);
- a degree (22) of the reference node (20), said degree (22) corresponding to the number of neighboring nodes (20) at one hop distance therefrom;
- a bandwidth of the reference node (20);
- an available cache space of the reference node (20);
- the number of requests (24) received previously by the reference node (20) for the requested network service (18); and/or
- the hop distance to the corresponding on-path node (34).

7. The method according to any of the preceding claims, further comprising:
f) Counting, by each node (20), the number of requests (24) received for the requested network service data (18), said number being indicative of a popularity of said network service data (18); and
g) Caching, by the one or more caching-selected nodes (20), the requested network service data (18) by replacing other network service data (18) based on the popularity.

8. The method according to any of the preceding claims, further comprising one or both of the following:
h) By each visited off-path neighbor node (32, 32a-l), causing transmission of respective node-related information (40) to the corresponding on-path node (34); and/or
i) Broadcasting, transmitting, and /or forwarding the request (24) by adding respective node-related information (34) thereto.

9. The method according to any of the preceding claims, **characterized in that** step b) further comprises:
b1) Forwarding the request (24) to a nearest node (20) or server device (14, 14a-f) for retrieving the data (18) in a shortest possible time by using routing information available in each on-path node (28, 28a-g).

10. An information-centric network comprising means for carrying out the method according to any of the preceding claims.

11. A node adapted for the information-centric network according to claim 10.

12. A computer program which, when the program is executed by an information-centric network, cause the information-centric network to carry out the method of any of the claims 1 to 9.

13. A computer-readable data carrier having stored thereon the computer program of claim 12.
